# FASCICULE DE BREVET EUROPEEN

(11) **EP 1 058 802 B1**
(45) Date de publication et mention de la délivrance du brevet: **15.01.2003**
(21) Numéro de dépôt: 99904908.3
(22) Date de dépôt: 18.02.1999
(51) Int. Cl.: F21S 2/00, F21V 8/00

(54) **DISPOSITIF D'ECLAIRAGE POUR CHAMP OPERATOIRE DU TYPE SANS OMBRE PORTEE**
BELEUCHTUNGSEINRICHTUNG ZUR ERZEUGUNG EINES SCHATTENFREIEN OPERATIONSFELDES
LIGHTING DEVICE FOR OPERATIVE SITE WITHOUT CAST SHADOW

(30) Priorité: 27.02.1998 FR 9802661
(43) Date de publication de la demande: 13.12.2000
(73) Titulaire: JPM (Société A Responsabilité Limitée), 54000 Nancy (FR)
(72) Inventeur: MOSCHKOWITZ, Jean-Pierre, F-54000 Nancy (FR)
(74) Mandataire: Poupon, Michel
(86) Numéro de dépôt international: FR9900360
(87) Numéro de publication internationale: WO99043980

(56) Documents cités:
- EP-A- 0 268 117
- DE-B- 2 854 684
- DE-U- 29 707 661
- FR-A- 2 149 368
- US-A- 4 757 426
- US-A- 4 786 127
- US-A- 5 497 295
- US-A- 5 613 752

## Description

La présente invention a pour objet un dispositif d'éclairage pour champ opératoire du type sans ombre portée, particulièrement mais non limitativement destiné à la chirurgie dentaire, comprenant une tête d'éclairage alimentée en lumière par des cordons de fibres optiques conduisant la lumière produite par un générateur de lumière, placé à distance de la tête d'éclairage, voir par exemple US-A-4 757 426.

On connaît déjà des dispositif d'éclairage permettant de limiter les ombres portées. Les dispositif les plus couramment utilisés dans le milieu médical ou dentaire sont des scialytiques ® qui comportent une tête d'éclairage présentant un réflecteur parabolique en verre associé à une ou plusieurs lampes et des jeux de miroirs.

Un des inconvénients des scialytiques ® est que leur source de lumière se trouvant au niveau de la tête d'éclairage, celle-ci produit une quantité de chaleur dans la zone de travail préjudiciable aussi bien pour les praticiens que pour les patients.

Un autre inconvénient de ce type d'éclairage est son volume important qui le rend relativement encombrant.

On a déjà proposé des systèmes d'éclairage d'une zone ciblée alimentés par fibre optique et une source de lumière déportée qui se propose ainsi de limiter la chaleur dégagée au niveau du champ opératoire. On peut par exemple citer le dispositif d'éclairage décrit dans le brevet FR 1 431 405. Toutefois, ce dispositif conserve un volume relativement important.

De plus, il ne permet pas de répondre totalement au besoin des éclairages localisés notamment dans le domaine dentaire, à savoir obtenir une zone lumineuse non pas circulaire mais de forme sensiblement rectangulaire.

La présente invention a pour objet de procurer un produit permettant d'obtenir de telles performances en réduisant également l'apport de chaleur dans la zone de travail.

Conformément à l'invention, ce résultat est obtenu avec un dispositif d'éclairage pour champ opératoire du type sans ombre portée, particulièrement mais non limitativement destinée à la chirurgie dentaire, comprenant une tête d'éclairage alimentée en lumière par au moins un des cordons de fibres optiques conduisant la lumière produite par un générateur de lumière placé à distance de la tête d'éclairage, caractérisé en ce que le générateur de lumière comporte un système mécanique permettant d'éloigner ou de rapprocher un embout de départ des cordons par rapport à une lampe du générateur de lumière.

En outre, la tête d'éclairage comporte des moyens pour projeter sur la zone de travail une tache lumineuse sensiblement rectangulaire nécessaire à l'éclairage du champ opératoire.

Selon une première variante, la tête de l'éclairage comporte essentiellement:
- en partie frontale au moins deux lentilles asphériques à face arrière plane disposées de part et d'autre de l'axe longitudinal de la tête d'éclairage et de positionnement angulaire α par rapport à l'axe longitudinal permettant la convergence de la lumière rendue en sortie par les deux lentilles,
- une terminaison de cordon de fibres optiques dirigée perpendiculairement à la face arrière plane de chaque lentille asphérique, les fibres optiques présentant en sortie de fibres au niveau de la terminaison une section de forme oblongue.

De préférence, le positionnement angulaire α par rapport à l'axe longitudinal est d'environ 5,5° et la distance entre la partie frontale de la terminaison du cordon de fibres optiques et la face arrière plane de chaque lentille asphérique est d'environ 35 mm.

Ainsi, le dispositif conforme à l'invention permet d'obtenir une tache lumineuse rectangulaire de dimensions 10 x 20 à 70 cm de la tête d'éclairage.

Selon une deuxième variante, la tête d'éclairage comporte un réflecteur concave et réfléchissant recevant la lumière d'un embout de sortie d'un cordon de fibre optique et la renvoyant vers le champ opératoire.

On comprendra mieux l'invention à l'aide de la description qui suit faite en référence aux dessins annexés dans lesquels :
- La **figure 1** est un schéma de principe d'un système d'éclairage selon une première variante,
- **La figure 2** est une vue de dessous en coupe d'une tête d'éclairage selon une première variante,
- La **figure 3** est une vue de face de la tête d'éclairage de la figure 2,
- **La figure 4** est une vue schématique du dessus du générateur de lumière,
- **Les figures 5a et 5b** sont respectivement des vues de côté en coupe et de face d'une terminaison de cordon de fibres optiques,
- La **figure 6** est une vue de dessus en coupe d'une tête d'éclairage selon une deuxième variante,
- La **figure 7** est une vue en perspective de la sortie de lumière et du réflecteur de la variante de la figure 6.

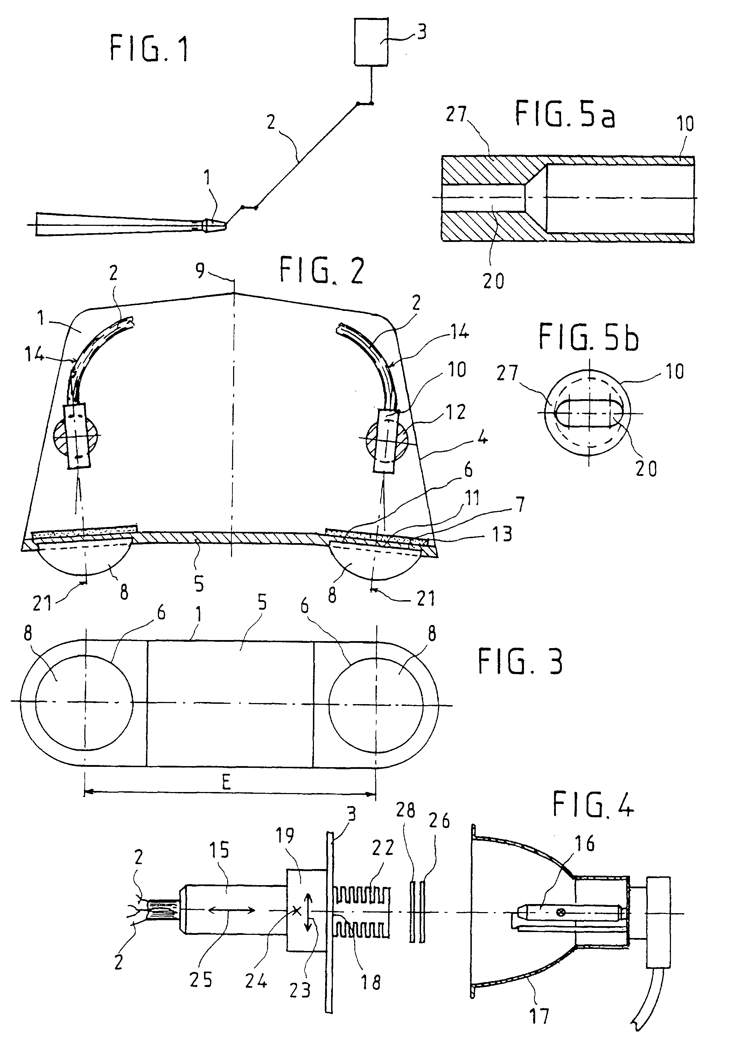

On se référera tout d'abord à la figure 1.

Le dispositif d'éclairage pour champ opératoire du type sans ombre portée se compose de manière connue d'une tête d'éclairage (1), de cordons de fibres optiques (2) permettant d'acheminer vers la tête d'éclairage (1) la lumière produite par un générateur de lumière (3) placé à distance de la tête d'éclairage (1). L'utilisation des fibres optiques permet, en éloignant la source de lumière de la zone de travail, de réduire de manière significative l'apport de chaleur très gênant pour le praticien et le patient.

On se réfère à présent aux figures 2, 3, 5a, 5b représentant une première variante de tête d'éclairage (1).

La tête d'éclairage (1) consiste en un carter (4), par exemple de forme trapézoïdale, comportant en partie frontale un support de lentille (5) réalisé par exemple en matière moulée, aluminium ou composite.

Le support de lentilles (5) comporte deux logements (6) à épaulement (7), par exemple de diamètre 45 mm, dans lesquels sont montées deux lentilles par exemple asphériques (8) à face arrière plane (11) de même diamètre extérieur que le logement et fixées dans celui-ci par collage ou par tout autre moyen de fixation.

Avantageusement, les lentilles asphériques, par exemple en verre, pourront présenter un diamètre extérieur de 45 mm, une épaisseur de 15,7 mm et une distance focale de 42 mm.

L'entraxe (E) des logements (6) est par exemple de 140 mm avec un positionnement angulaire de chaque logement d'environ 5,5° par rapport à l'axe longitudinal (9) de la tête d'éclairage pour permettre le même positionnement angulaire des axes (21) des lentilles asphériques (8).

La tête d'éclairage comporte en outre une terminaison (10) de cordon de fibres optiques dirigée perpendiculairement à la face arrière plane (11) de chaque lentille asphérique sensiblement suivant l'axe optique de celle-ci.

Chaque terminaison (10) de cordon (2) est montée dans la tête d'éclairage (1) au moyen des éléments fixateurs (12) permettant d'orienter la terminaison (10) en rotation sur elle-même et de positionner angulairement et en profondeur celles-ci par rapport aux lentilles (8), lesdits fixateurs (12) comportant en outre des vis de pression (non représentées) permettant d'immobiliser les terminaisons après leurs réglages de positionnement.

Comme illustré aux figures 5a et 5b, les terminaisons (10) du cordon de fibres optiques consistent en un corps de cyclindre (27) par exemple en aluminium muni d'un alésage central conformé de manière à avoir au moins en partie une section de forme oblongue (20) permettant de conformer de la même manière l'ensemble des sorties de fibres afin de produire une tache lumineuse rectangulaire à angles arrondis au niveau de la zone de travail.

Les éléments fixateurs réalisés en aluminium usiné sont fixés par exemple par visserie sur un support (non représenté) dans la tête d'éclairage.

Chaque lentille est associé en sortie ou en entrée de lentille (voir figure 2) à un filtre (13) réalisé en verre ou en PMMA avec au moins une face en relief d'aspect martelée permettant de redresser l'aberration de la lumière rendue par lesdites filtres.

Chaque filtre (13) est placé préférentiellement au plus près de la lentille en entrée (voir figure 2) ou en sortie de celle-ci et sera fixé mécaniquement, par exemple au support de lentilles (5) par agrafage, bridage ou collage.

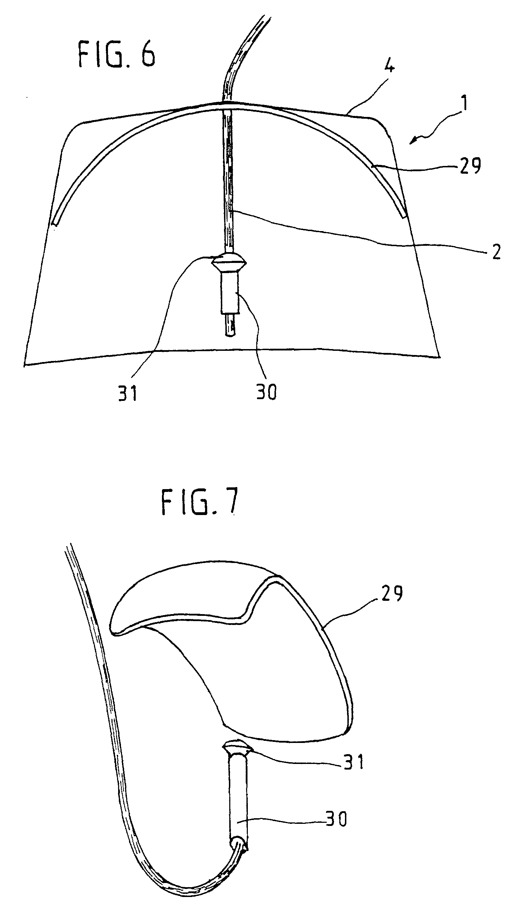

On se reporte à présent aux figures 6 et 7 représentant une deuxième variante de tête d'éclairage qui comporte le même carter (4) que dans la première variante.

Le cordon de fibres optiques (2) arrive par l'arrière du carter et passe sous un réflecteur (29) appliqué contre le fond et à l'intérieur du carter.

La terminaison du cordon de fibres optiques est recourbée de manière à ce que l'embout (30) comportant un système à lentille "champ large" (31) soit dirigé vers le réflecteur (29).

Ledit réflecteur (29) présente une forme périphérique déterminée, par exemple sensiblement rectangulaire 10 x 20 cm, et sa surface est concave.

Ledit réflecteur (29) peut être en métal poli ou en verre ou en matière plastique revêtu de tout matériau réfléchissant la lumière de façon à renvoyer la lumière vers l'avant de la tête d'éclairage (1).

Dans cette variante, la forme ovale ou rectangulaire de la tache lumineuse est donnée par la forme du réflecteur concave (29).

Grâce au système de positionnement des embouts de départ des cordons optiques qui sera décrit plus loin, la lumière sortant des embouts de sortie (30) ne comporte plus de rayons IR à éliminer et on peut utiliser un simple matériau réfléchissant pour le réflecteur et une simple vitre (32) à l'avant de la tête (au lieu de verre dichroïque onéreux).

Les paragraphes qui suivent s'appliquent aux deux variantes de réalisation.

De manière avantageuse, un cordon (2) est constitué d'un réseau de fibres optiques, par exemple d'environ 80 fibres protégées par une gaine (14), par exemple en PVC, ladite gaine étant emboîtée et collée à une extrémité dans un embout cylindrique de départ et à l'autre dans la terminaison (10).

De manière préférentielle, les fibres optiques sont des fibres optiques en matière plastique, de préférence en PMMA, par exemple d'un diamètre de 0,5 mm.

Le choix spécifique des fibres optiques en PMMA permet de conserver une température de couleur d'environ 5400° Kelvin correspondant à une lumière très blanche ce qui n'est pas le cas pour les fibres optiques en verre qui ont tendance à abaisser la température de couleur, la lumière devenant plus jaune.

Le ou les deux cordons de fibres (2) comportent en entrée de fibres un même embout cylindrique de départ (15) destiné à être positionné en sortie du générateur de lumière (3).

De manière préférentielle, l'embout cylindrique (15) comporte des rainures usinées (22), par exemple de préférence très serrées, lesdites rainures permettant de dissiper la chaleur produite par le générateur de lumière en utilisant la ventilation naturelle.

On pourra toutefois utiliser d'autres moyens de ventilation pour l'embout cylindrique.

De manière préférentielle, le générateur de lumière (3) (voir figure 4) comporte une lampe (16) à micro-décharge à réflecteur ellipsoïdal (17) à ballast électronique, par exemple en aluminium poli avec une lampe d'une puissance de 35 ou 50 W, un voltage de 85 Volts pouvant varier entre plus ou moins 20 %.

Le générateur de lumière comporte en outre un appareillage électronique comme dans ses éléments constitutifs et que l'on ne décrira pas ici.

Le générateur comporte en outre une sortie (18) munie d'une pièce d'usinage (19) permettant l'emboîtement de l'embout commun de départ (15) des cordons (2) de fibres optiques avec un système de réglage sur deux axes (23,24) pour l'alignement sur la lampe, ladite pièce comportant un alésage concentrique avec des moyens d'immobilisation (non représentés) dudit embout, par exemple par une vis de pression disposée transversalement par rapport à la pièce d'usinage.

Le positionnement sur deux axes pourrait également se faire directement au niveau de la lampe. Dans ce mode de réalisation, l'embout commun de départ de cordons resterait alors fixe.

De manière avantageuse, ladite pièce d'usinage (19) comporte un système mécanique (non représenté) permettant d'éloigner ou de rapprocher l'embout commun de départ des cordons par rapport à la lampe comme illustré par la double flèche (25), afin de régler l'intensité du flux lumineux produit. On peut ainsi faire varier par exemple le flux lumineux de 5.000 à 25.000 lux par action sur l'embout de départ.

De manière avantageuse, un filtre de protection (26) des fibres optiques est interposé entre l'embout commun de départ (15) et la lampe (16), ledit filtre étant monté par exemple dans un support métallique avec bridage par ressort.

Ledit filtre de protection permet ainsi de protéger les fibres optiques d'une part des rayons ultraviolets qui, avec le temps, peuvent entraîner un jaunissement de la matière des fibres optiques et, d'autre part, des rayons infrarouges, une température trop élevée sur l'embout de départ des fibres pouvant altérer de manière sensible la structure des fibres optiques, par exemple par décomposition des résines servant de liant ou par combustion des fibres en PMMA.

Les filtres de protection peuvent être réalisées par exemple en verre ou quartz par exemple de dimension 30 x 30 mm avec une épaisseur de quelques millimètres.

De manière avantageuse, un second filtre (28) peut être intercalé entre l'embout commun de départ (15) et la lampe (16) de manière à rehausser la température de couleur (par exemple pour renforcer les "bleus").

De manière avantageuse, la tête d'éclairage et le générateur sont fixés avec un bras articulé dans lequel sont positionnés de manière connue les cordons de fibres optiques.

L'ensemble du système (à savoir la tête d'éclairage, le générateur de lumière, le bras articulé avec cordon de fibres optiques) pourra être monté sur tous types de support et notamment sur tous types d'équipements dentaires de la même façon par exemple que les scialytiques ® traditionnels.

## Revendications

1. Dispositif d'éclairage pour champ opératoire du type sans ombre portée, particulièrement mais non limitativement destiné à la chirurgie dentaire, comprenant une tête d'éclairage (1) alimentée en lumière par au moins un des cordons de fibres optiques (2) conduisant la lumière produite par un générateur de lumière (3), placé à distance de la tête d'éclairage (1), **caractérisé en ce que** le générateur de lumière (3) comporte un système mécanique permettant d'éloigner ou de rapprocher un embout de départ (15) des cordons (2) par rapport à une lampe (16) du générateur de lumière (3).

2. Dispositif selon la revendication 1, **caractérisé en ce que** la tête d'éclairage (1) comporte des moyens pour projeter sur la zone de travail une tache lumineuse sensiblement rectangulaire nécessaire à l'éclairage du champ opératoire.

3. Dispositif selon la revendication 2, **caractérisé en ce que** la tête d'éclairage (1) comporte essentiellement :
- en partie frontale au moins deux lentilles asphériques à face arrière plane disposées de part et d'autre de l'axe longitudinal (9) de la tête d'éclairage (1) et de positionnement angulaire α par rapport à l'axe longitudinal permettant la convergence de la lumière rendue en sortie par les deux lentilles,
- une terminaison (10) de cordon de fibres optiques (2) dirigée perpendiculairement à la face arrière plane (11) de chaque lentille asphérique (8), les fibres optiques présentant en sortie de fibres au niveau de la terminaison une section de forme oblongue (20).

4. Dispositif selon la revendication 3, **caractérisé en ce que** ledit positionnement angulaire α par rapport à l'axe longitudinal (9) est d'environ 5,5° et la distance entre la partie frontale de la terminaison (10) du cordon de fibres optiques et la face arrière plane de chaque lentille asphérique est d'environ 35 mm.

5. Dispositif selon l'une quelconque des revendications 3 et 4, **caractérisé en ce que** chaque lentille (8) comporte un filtre (13) en sortie ou en entrée de lentille, ledit filtre permettant de redresser l'aberration de la lumière rendue par les lentilles.

6. Dispositif selon l'une quelconque des revendications 3 et 4, **caractérisé en ce que** chaque terminaison (10) de cordon (2) est montée dans la tête d'éclairage (1) au moyen des éléments fixateurs (12) permettant d'orienter la terminaison (10) en rotation sur elle-même et de positionner angulairement et en profondeur celles-ci par rapport aux lentilles (8), lesdits éléments fixateurs (12) comportant en outre des vis.

7. Dispositif selon la revendication 2, **caractérisé en ce que** la tête d'éclairage (1) comporte un réflecteur (29) concave et réfléchissant (29) recevant la lumière d'un embout de sortie (30) d'un cordon de fibre optique et la renvoyant vers le champ opératoire.

8. Dispositif selon la revendication 7, **caractérisé en ce que** le matériau du réflecteur est choisi dans l'ensemble (métal poli, verre réfléchissant, matière plastique revêtue).

9. Dispositif selon l'une des revendications 7 à 8, **caractérisé en ce que** le réflecteur est sensiblement rectangulaire.

10. Dispositif selon l'une des revendications 7 à 9, **caractérisé en ce que** l'embout de sortie (30) comporte un système à lentille "champ large" (30).

11. Dispositif selon l'une des revendications 1 à 10, **caractérisé en ce que** l'embout de départ cylindrique (15) comporte des rainures usinées (22) de dissipation de chaleur.

12. Dispositif selon l'une quelconque des revendications 1 à 11, **caractérisé en ce que** le générateur de lumière comporte une lampe (16) à micro-décharge à réflecteur ellipsoïdal (17) à ballast électronique.

13. Dispositif selon l'une des revendications 1 à 12, **caractérisé en ce que** le générateur comporte en outre une sortie (18) munie d'une pièce d'usinage (19) permettant l'emboîtement de l'embout de départ (15) des cordons (2) de fibres optiques avec système de réglage sur deux axes (23,24) pour l'alignement sur la lampe, ladite pièce comportant un alésage concentrique avec des moyens d'immobilisation dudit embout.

14. Dispositif selon la revendication 13, **caractérisé en ce que** ladite pièce d'usinage (19) porte également le système mécanique permettant d'éloigner et de rapprocher l'embout (15).

15. Dispositif selon l'une quelconque des revendications 1 à 14, **caractérisé en ce qu'**un filtre de protection (26) des fibres optiques est interposé entre l'embout commun de départ (15) et la lampe (16).

16. Dispositif selon l'une quelconque des revendications 1 à 15, **caractérisé en ce qu'**un second filtre (28) est intercalé entre l'embout commun de départ (15) et la lampe (16) de manière à rehausser la température de couleur.

17. Dispositif selon l'une des revendications 1 à 16, **caractérisé en ce que** les fibres optiques sont des fibres en matière plastique.

## Patentansprüche

1. Beleuchtungseinrichtung für ein schattenfreies Operationsfeld, die insbesondere, jedoch nicht ausschließlich, für die Zahnchirurgie bestimmt ist, wobei die Beleuchtungseinrichtung einen Beleuchtungskopf (1) aufweist, der mit Licht mittels mindestens einer Lichtfaserlitze (2) gespeist wird, die das Licht leitet, das von einem Lichtgenerator (3) erzeugt wird, der im Abstand vom Beleuchtungskopf (1) angeordnet ist, **dadurch gekennzeichnet, dass** der Lichtgenerator (3) ein mechanisches System aufweist, das ein Endstück (15) am Eingang der Lichtfaserlitze (2) von einer Lampe (16) des Lichtgenerators (3) weg oder näher an diese bewegt.

2. Einrichtung nach Anspruch 1, **dadurch gekennzeichnet, dass** der Beleuchtungskopf (1) Mittel aufweist, die einen zur Beleuchtung des Operationsfeldes erforderlichen, im wesentlichen rechteckigen Lichtpunkt auf den Arbeitsbereich projiziert.

3. Einrichtung nach Anspruch 2, **dadurch gekennzeichnet, dass** der Beleuchtungskopf (1) im wesentlichen aufweist:
- im vorderen Bereich mindestens zwei asphärische Linsen mit hinterer ebener Stirnfläche, die auf gegenüberliegenden Seiten der Längsachse (9) des Beleuchtungskopfes (1) gegenüber der Längsachse (9) unter einem Winkel (α) angeordnet sind, und die eine Konvergenz des aus den zwei Linsen austretenden Lichtes erlauben,
- ein Ende (10) der Lichtfaserlitze (2), das senkrecht zur hinteren ebenen Stirnfläche (11) jeder asphärischen Linse (8) ausgerichtet ist, wobei die Lichtfasern an ihrem Ausgang am Ende einen länglichen Querschnitt (20) aufweisen.

4. Einrichtung nach Anspruch 3, **dadurch gekennzeichnet, dass** der genannte Winkel (α) gegenüber der Längsachse (9) ungefähr 5,5° beträgt und der Abstand zwischen dem vorderen Teil des Endes (10) der Lichtfaserlitze und der hinteren ebenen Stirnfläche jeder asphärischen Linse (8) ungefähr 35 mm beträgt.

5. Einrichtung nach einem der Ansprüche 3 oder 4, **dadurch gekennzeichnet, dass** jede Linse (8) am Ausgang oder am Eingang einen Filter (13) zum Korrigieren der Aberration des aus den Linsen austretenden Lichtes aufweist.

6. Einrichtung nach einem der Ansprüche 3 oder 4, **dadurch gekennzeichnet, dass** jedes Ende (10) der Lichtfaserlitze (2) im Beleuchtungskopf (1) mittels Befestigungselemente (12) montiert ist, die eine Drehbewegung des Endes (10) auf dem Beleuchtungskopf erlauben, und erlauben, seine Winkel und seine Tiefe gegenüber den Linsen (8) einzustellen, wobei die genannten Befestigungselemente (12) unter anderem Schrauben aufweisen.

7. Einrichtung nach Anspruch 2, **dadurch gekennzeichnet, dass** der Beleuchtungskopf (1) einen konkaven reflektierenden Reflektor (29) aufweist, der das Licht von einem Ausgangsendstück (30) einer Lichtfaserlitze empfängt und dieses in Richtung des Operationsfeldes reflektiert.

8. Einrichtung nach Anspruch 7, **dadurch gekennzeichnet, dass** das Material des Reflektors aus der Gruppe (poliertes Metall, reflektierendes Glas, beschichteter Kunststoff) ausgewählt ist.

9. Einrichtung nach einem der Ansprüche 7 oder 8, **dadurch gekennzeichnet, dass** der Reflektor im Wesentlichen rechteckig ist.

10. Einrichtung nach einem der Ansprüche 7 bis 9, **dadurch gekennzeichnet, dass** das Ausgangsendstück (30) ein Weitwinkel-Linsensystem (30) aufweist.

11. Einrichtung nach einem der Ansprüche 1 bis 10, **dadurch gekennzeichnet, dass** das zylindrische Eingangsendstück (15) Rillen (22) aufweist, die durch Wärmeabstrahlung erzeugt werden.

12. Einrichtung nach einem der Ansprüche 1 bis 11, **dadurch gekennzeichnet, dass** der Lichtgenerator eine Mikroentladungslampe (16) mit einem elliptischen Reflektor (17) und einem elektronischen Vorschaltgerät aufweist.

13. Einrichtung nach einem der Ansprüche 1 bis 12, **dadurch gekennzeichnet, dass** der Generator unter anderem einen Ausgang (18) aufweist, der mit einem maschinell bearbeiteten Teil (19) versehen ist, das die Verbindung des Eingangsendstücks (15) der Lichtfaserlitze mit einem Zweiachsen-Regelungssystem (23, 24) zum Ausrichten gegenüber der Lampe ermöglicht, wobei das genannte Teil eine mit Mitteln zum Festhalten des genannten Endstückes konzentrische Bohrung aufweist.

14. Einrichtung nach Anspruch 13, **dadurch gekennzeichnet, dass** das genannte maschinell bearbeitete Teil (19) außerdem das mechanische System trägt, das es erlaubt, dass das Eingangsendstück (15) weggerückt oder nähergebracht wird.

15. Einrichtung nach einem der Ansprüche 1 bis 14, **dadurch gekennzeichnet, dass** zwischen dem Eingangsendstück (15) und der Lampe (16) ein Filter (26) zum Schutz der Lichtfasern angeordnet ist.

16. Einrichtung nach einem der Ansprüche 1 bis 15, **dadurch gekennzeichnet, dass** zwischen dem Eingangsendstück (15) und der Lampe (16) ein zweiter Filter (28) zur Erhöhung der Farbentemperatur angeordnet ist.

17. Einrichtung nach einem der Ansprüche 1 bis 16, **dadurch gekennzeichnet, dass** die Lichtfasern Kunststofffasern sind.

## Claims

1. Lighting apparatus for an operative field, of the type which casts no shadow, more especially but not limitingly intended for dental surgery, which apparatus comprises a lighting head (1) supplied with light by at least one of the bundles of optical fibres (2) conducting the light produced by a light generator (3) placed at a distance from the lighting head (1), **characterised in that** the light generator (3) comprises a mechanical system which permits a source tip (15) of the bundles (2) to be moved away from or brought near to a lamp (16) of the light generator (3).

2. Apparatus according to claim 1, **characterised in that** the lighting head (1) comprises means for projecting a substantially rectangular light patch, necessary for lighting the operative field, onto the working area.

3. Apparatus according to claim 2, **characterised in that** the lighting head (1) substantially comprises:
- in the front portion, at least two aspherical lenses which have a planar rear face and are disposed on each side of the longitudinal axis (9) of the lighting head (1) and at an angular position α relative to the longitudinal axis, so as to permit the light, produced at the outlet by the two lenses, to converge, and
- a termination (10) of a bundle of optical fibres (2), which is orientated perpendicularly to the planar rear face (11) of each aspherical lens (8), the optical fibres having an oblong cross-section (20) at the fibre outlet on a level with the termination.

4. Apparatus according to claim 3, **characterised in that** said angular position α relative to the longitudinal axis (9) is about 5.5°, and the distance between the front portion of the termination (10) of the bundle of optical fibres and the planar rear face of each aspherical lens is about 35 mm.

5. Apparatus according to any of claims 3 and 4, **characterised in that** each lens (8) comprises a filter (13) at the lens outlet or inlet, said filter permitting the aberration of the light, produced by the lenses, to be rectified.

6. Apparatus according to any of claims 3 and 4, **characterised in that** each termination (10) of a bundle (2) is mounted in the lighting head (1) by means of securing members (12), which permit the termination (10) to be rotationally orientated on itself and permit said terminations to be positioned angularly and in depth relative to the lenses (8), said securing members (12) additionally comprising screws.

7. Apparatus according to claim 2, **characterised in that** the lighting head (1) comprises a concave reflecting reflector (29), which receives the light from an output tip (30) of a bundle of optic fibres and sends it towards the operative field.

8. Apparatus according to claim 7, **characterised in that** the material of the reflector is selected from the group (polished metal, reflecting glass, coated plastics material).

9. Apparatus according to one of claims 7 to 8, **characterised in that** the reflector is substantially rectangular.

10. Apparatus according to one of claims 7 to 9, **characterised in that** the output tip (30) comprises a "wide field" lens system (30).

11. Apparatus according to one of claims 1 to 10, **characterised in that** the cylindrical source tip (15) comprises machined grooves (22) for dissipating heat.

12. Apparatus according to any of claims 1 to 11, **characterised in that** the light generator comprises a micro-discharge lamp (16) having an ellipsoidal reflector (17) with electronic ballast.

13. Apparatus according to one of claims 1 to 12, **characterised in that** the generator also comprises an output (18) provided with a machining part (19) which permits the engagement of the source tip (15) of the bundles of optical fibres (2) with an adjusting system on two axes (23, 24) for alignment on the lamp, said part comprising a concentric bore with means for immobilising said tip.

14. Apparatus according to claim 13, **characterised in that** said machining part (19) also carries the mechanical system which permits the tip (15) to be moved away and to be moved closer.

15. Apparatus according to any of claims 1 to 14, **characterised in that** a filter (26) for protecting the optical fibres is interposed between the common source tip (15) and the lamp (16).

16. Apparatus according to any of claims 1 to 15, **characterised in that** a second filter (28) is inserted between the common source tip (15) and the lamp (16) so as to raise the colour temperature.

17. Apparatus according to one of claims 1 to 16, **characterised in that** the optical fibres are fibres formed from plastics material.
